Europäisches Patentamt

European Patent Office

Office européen des brevets

Publication number: **0 285 272**
**A2**

# EUROPEAN PATENT APPLICATION

Application number: 88301993.7

Date of filing: 08.03.88

Int. Cl.⁴ **G11B 15/30 , G11B 15/32**

Priority: 31.03.87 GB 8707621

Date of publication of application:
05.10.88 Bulletin 88/40

Designated Contracting States:
BE CH DE FR GB LI NL

Applicant: THORN EMI Datatech Limited
North Feltham Trading Estate
Feltham Middlesex(GB)

Inventor: McWhirr, Michael
Fairways Warrens Hill
Cheddar Somerset, BS27 3LN(GB)

Representative: Marsh, Robin Geoffrey et al
Thorn EMI Patents Limited The Quadrangle
Westmount Centre Uxbridge Road
Hayes Middlesex, UB4 0HB(GB)

Drive hub assemblies.

A drive hub assembly for imparting rotational motion about an axis to a load has a supporting surface (2) against which a load can be clamped and a drive.

The assembly further comprises a first rotary member (31) and a second rotary member (15) arranged concentrically with respect to and adapted to co-operate with the first rotary member (31), the first and second rotary numbers (31, 15) being capable of relative rotation about the axis to permit loading and unloading of the load.

Clamping means (13) coupled to the first rotary member (31) are movable, with a motion that includes an angular component and an axial component, between a clamping position in which the clamping means (13) clamps a load axially against the supporting surface (2) and a retracted position allowing loading and unloading of the load.

The arrangement is such that relative rotation of the first and second rotary members (31, 15) causes the clamping means (13) to move between the clamping position and the retracted position.

FIG.1

## DRIVE HUB ASSEMBLIES

The present invention relates to mechanisms for automatically clamping a rotatable load to a motor driven hub and for unclamping the load such that it may be readily removed when the hub is at rest.

The invention is particularly, but not exclusively, suitable for use in self-threading horizontally disposed magnetic tape transports for instrumentation recording such as are described in co-pending British Patent Application No. 8530217 (published under GB 2183890A) and in which the rotatable load is a supply reel of magnetic tape. Such transports may be required to operate under conditions of high vertical acceleration as may be encountered, for example, in vehicles or aircraft and which require the supply reel to be firmly clamped to its associated drive hub in the axial direction.

Mechanisms for clamping supply reels in an axial direction have been described in U.S. Patent No. 3801033 and in British Patent Nos. 1362716 and 1501433. These mechanisms do not utilise the power of the supply reel motor, however, and, furthermore, the clamping mechanisms described all protrude well above the reel-supporting surface of the hub when in the unclamped condition and would be unsuitable for use with side-loaded tape transports such as are described in GB 2183890A.

Automatic supply reel clamping mechanisms which utilise the power of the supply reel drive motor have been described in e.g. our co-pending British Patent Application No. 8603313 (refiled and published under GB 2186643A). These mechanisms, however, clamp in a radial rather than an axial direction and are more suitable for use with digital tape handlers in which the reels are subject to high angular, rather than high vertical, accelerations.

It is an object of the present invention to provide an improved mechanism for clamping, in an axial direction, a rotatable load to a drive hub and for unlocking the load such that it may be readily removed.

According to the present invention there is provided a drive hub assembly for imparting rotational motion about an axis to a load, said assembly having a supporting surface against which a said load can be clamped, said assembly comprising:

a drive;

a first rotary member;

a second rotary member arranged concentrically with respect to and adapted to co-operate with said first rotary member, said first and second rotary members being capable of relative rotation about said axis to permit loading and unloading of a said load;

and clamping means, coupled to said first rotary member, said clamping means being movable, with a motion that includes an angular component and an axial component, between a clamping position in which said clamping means clamps a said load axially against said supporting surface and a retracted position allowing loading and unloading of a said load;

the arrangement being such that, in use, relative rotation of said first and second rotary members causes said clamping means to move from said retracted position to said clamping position to clamp a said load or from said clamping position to said retracted position to permit loading and unloading of a said load.

In a drive hub assembly provided in accordance with the invention, the clamping and unclamping of the load is effected by relative rotation of said first and second rotary members. Accordingly the power of the supply reel motor may be utilised to clamp and unclamp the load in the axial direction.

The invention will now be described, by way of example, with reference to the accompanying drawings in which:

Figure 1 is a perspective drawing of a supply hub assembly incorporating a clamping mechanism with lever arms fully retracted,

Figure 2 is a side view of the supply hub assembly with lever arms fully retracted,

Figure 3 is a plan view of the supply hub assembly, with lever arms fully retracted, shown attached to a drive motor shaft,

Figure 4 is a side sectional view of the supply hub assembly with a tape reel fully clamped to the hub, shown attached to the drive hub, viewed along the line AA of Figure 3,

Figure 5 is a side view of a lever arm pivoted to a connecting arm,

Figure 6 is an edge view of the lever arm pivoted to the connecting arm,

Figure 7 illustrates the operation of the lever arm and is, in part, a sectional view of the supply hub assembly viewed along the line BB of Figure 3,

Figure 8 shows the supply hub assembly viewed from beneath,

Figure 9 is a stretched out view of the outer surface of a cam sleeve.

The supply hub assembly to be described is suitable for supporting removeable reels of instrumentation recording tape, the reels typically having an outer diameter of up to 36 cm and an inner diameter of 7.5 cm. The tape width is typically 25 mm. The supply hub is motor driven and incorporates a mechanism utilising the power of its associated drive motor to automatically clamp a reel to the hub in the axial direction and to automatically unclamp a reel prior to its removal.

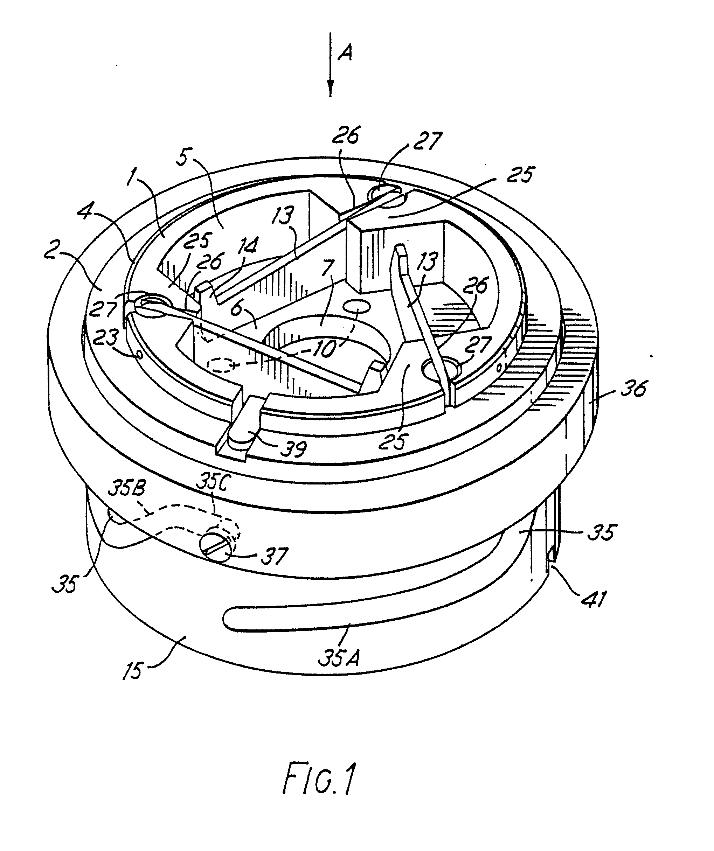

Referring to Figures 1, 2, 3 and 4, a supply hub assembly according to the invention is substantially cylindrically shaped and the upper surface of a hub body member 1 is relieved around its periphery to form a shoulder whose annular horizontal surface 2 provides a supporting surface for a supply reel 3 of recording tape. The cylindrical vertical surface of the shoulder has a depth of typically 4 mm and a diameter slightly less than the inner diameter of the reel 3. An upper peripheral chamfer 4 assists centring when a reel is loaded to the hub. The upper surface of the body member 1 has a substantially cylindrical recess 5 into which three substantially hook-shaped lever arms 13 are retracted when the hub is in the unclamped condition. The recess 5 extends to a substantially annular shaped horizontal platform 6 provided with three fixing holes 10 equally spaced around a central orifice 7.

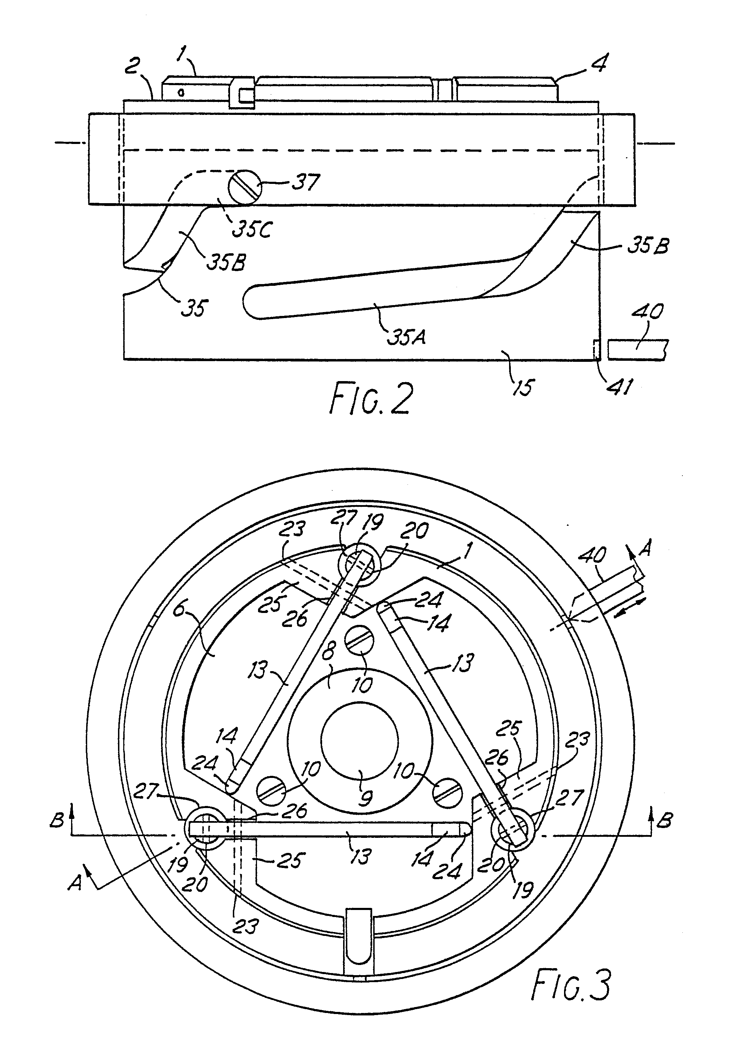

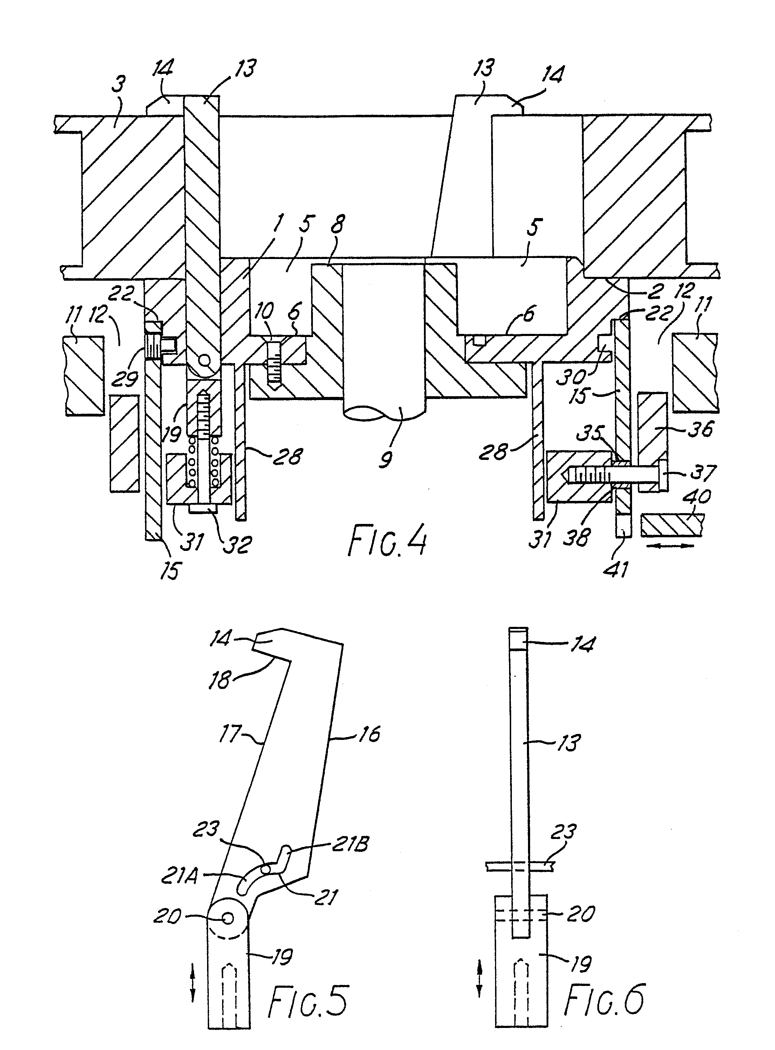

Referring to Figures 3 and 4, a vertical axial drive shaft 9 is fixed to the hub body member by means of a flanged sleeve 8 extending through the orifice 7, the sleeve flange being fixed to the underside of the platform 6 by means of downwardly extending screws positioned in the fixing holes 10. The drive shaft 9 joins a drive motor (not shown) mounted to the underside of the deck plate 11 of the tape transport, the drive shaft 9 and the hub assembly protruding above the level of the deck plate 11 through a circular orifice 12 in the deck plate. The three lever arms 13 are pivotally mounted to the hub body member such that they may be retracted to lie substantially horizontally in the recess 5, as shown in Figures 1, 2 and 3, or raised to a substantially vertical position such that outwardly extending tip portions 14 of each lever arm may firmly clamp a tape reel 3 against the annular reel-supporting surface 2 as shown in Figure 4. A hollow cylindrical cam sleeve 15 lying beneath the reel-supporting surface 2 is rotatable relative to the hub body member 1, and the lever arms 13 may be raised or retracted by differential rotation of the hub body member relative to the cam sleeve or vice-versa. The mechanism linking the lever arm motion to this relative rotation will now be described in detail.

Referring to Figures 5 and 6 which show a lever arm 13 in a part-raised position, each lever arm 13 is formed from steel plate and has outer and inner long edges 16 and 17 respectively which are tapered relative to one another, the inner long edge 17 extending to a tip portion 14 whose inner edge 18 lies at right angles to the edge 17. The lower end of each lever arm freely fits into a slot provided in the upper end of a downwardly extending connecting arm 19 and is pivoted to the connecting arm by means of a pivot pin 20. A through-slot 21 in the lower region of the lever arm has a lower curved region 21A leading to a short straight region 21B which lies parallel to the inner long edge 17. A horizontal fixed pin 23 lying at right angles to the planar surfaces of the lever arm passes through the slot 21 with a sliding fit such that if the connecting arm 19 is moved vertically upwards or downwards relative to the fixed pin 23, the slot provides a cam surface defining the motion of the lever arm, the pin 23 being the cam follower. The lever arm is fully retracted when the connecting arm is in an uppermost positiion and clamping is effected by moving each connecting arm in a downward direction.

Referring to Figures 1, 2 and 3, the three lever arms 13, when fully retracted, lie in the recess 5, the outer edges 16 loosely resting in respective ones of three shallow slots 24 provided in the platform 6, the slots 24 lying along the sides of an equilateral triangle. Three equally spaced support portions 25 of the body member 1 inwardly protrude into the recess 5 and each portion 25 has a vertical slot 26 aligned with and downwardly extending to respective ones of the slots 24. Each slot 26 extends horizontally to an associated vertical through-hole 27 positioned at an apex of the aforementioned equilateral triangle. The three lever arms 13 fit loosely into respective ones of the slots 26 and the three fixed pins 23 which pass through the cam slots 21 in each lever arm are fixed into holes in the support portions 25 lying to either side of the slots 26. The three connecting arms 19 extend vertically downward through the holes 27 with a loose fit, protruding beneath the lower surface of the platform 6, and each of the three pivot pins 20 linking a lever arm 13 to its associated connecting arm 19 lies along a diameter of its associated through-hole 27.

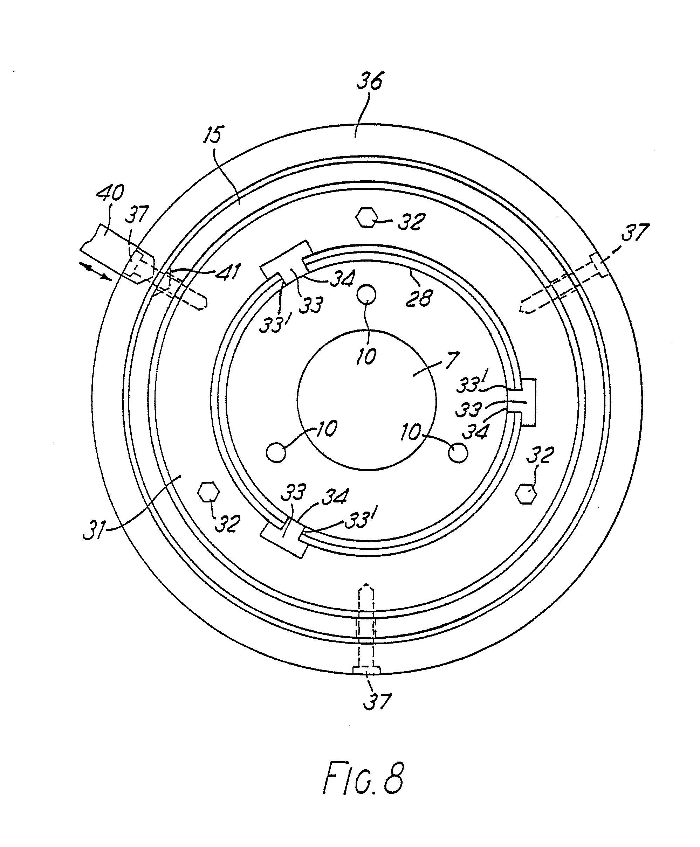

Referring to Figures 4 and 8, a thin walled cylindrical portion 28 of the hub body member 1 extends vertically downward from the lower surface of the platform 6 to lie concentric with the drive shaft 9 in the annular space between the drive shaft 9 and the cam sleeve 15. The cam sleeve 15 has a similar outer diameter to the outer diameter of the body member 1 and the upper end region of the cam sleeve 15 is a sliding fit against a relieved annular shoulder 22 on the peripheral surface of the body member 1. Three equally spaced grub screws 29 are screwed into the upper end region of the cam sleeve 15 and extend into an annular groove 30 in the relieved region of the body member 1, thereby supporting the cam sleeve 15 on the body member 1 while permitting rotation of the cam sleeve 15 relative to the body member. An inner annular ring 31 of rectangular cross section loosely fits into the annular space between the cylindrical portion 28 of the hub body member and the cam sleeve 15. The ring 31 is screw fixed by means of three vertical spring-loaded fixing screws 32 to the lower ends of the three connecting arms 19 such that, when the ring 31 is raised or lowered, the lever arms 13 are retracted or raised. The downwardly extending cylindrical portion 28 of the hub-body member is provided with three equally spaced vertical through-slots 33' extending to its lower end surface. Three inserts 33 of a low friction plastics material are firmly fixed into the inner periphery of the ring 31 such that a substantially rectangular portion 34 of each insert extends into each through-slot 32 with a sliding fit, thereby permitting vertical movement of the ring 31 relative to the body member 1, but preventing rotation of the ring relative to the body member.

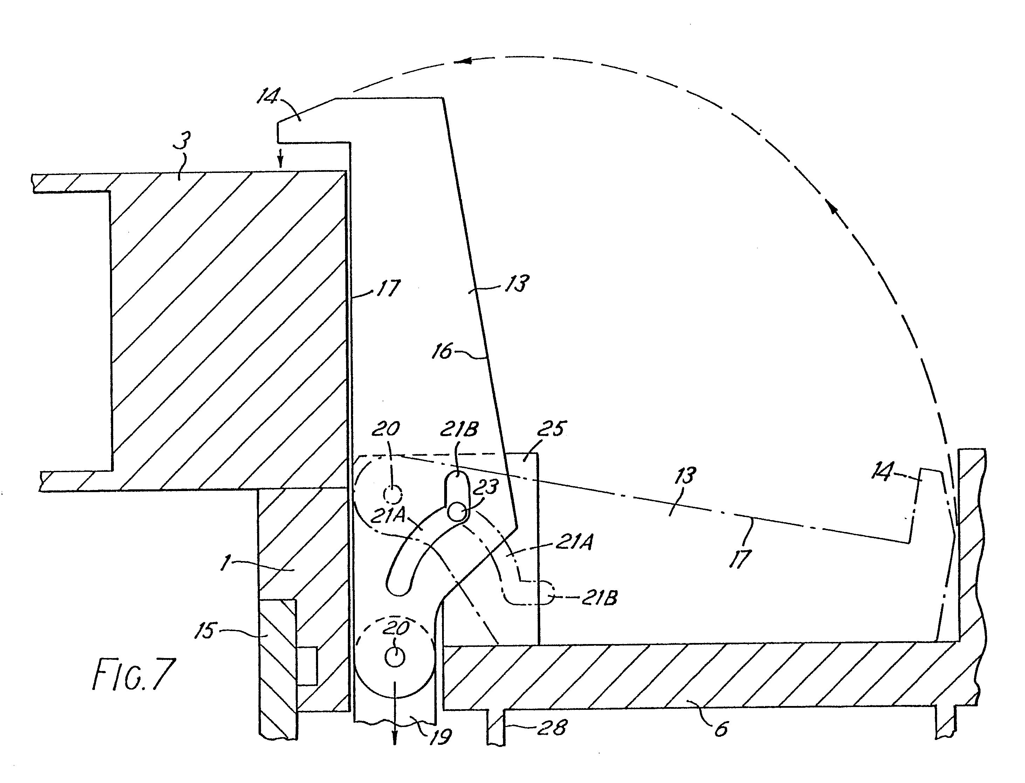

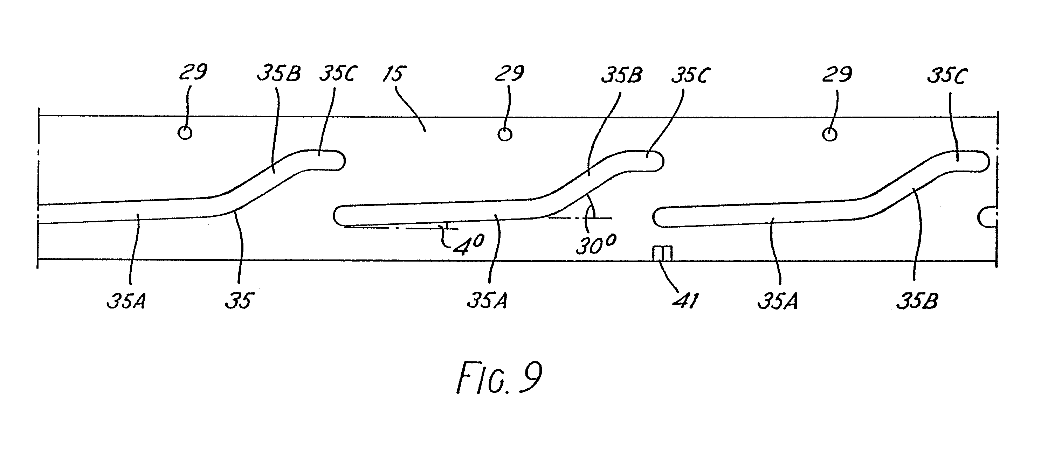

Referring also to Figures 1, 2, 4 and 9, the cam sleeve 15 is provided with three equally spaced cam slots 35. An outer annular ring 36 of rectangular cross-section loosely fits around the cam sleeve 15. The outer ring 36 is fixed to the inner ring 31 by means of three equally spaced fixing screws 37 directed radially inwards. Each screw 37 passes through an associated cam slot 35, a roller sleeve 38 being provided around each screw 37 such that, if the hub body member 1 is caused to rotate relative to the cam sleeve 15 or vice-versa, each roller sleeve will follow the profile of its associated cam slot 35 and the outer and inner rings 36, 31 will move vertically relative to the hub body member. Each cam slot 35 extends over one third of the periphery of the cam sleeve 15, thereby permitting a maximum relative rotation of 120°. The lower end of each connecting arm 19 is screw fixed to the inner ring 31 and the upper end of each connecting arm 19 is pivoted to its associated lever arm 13 as hereinbefore described. The geometry and positioning of the cam slots 35 and 21 are designed such that, when the hub body member 1 is positioned fully anti-clockwise relative to the cam sleeve 15, looking in the direction indicated by the arrow A in Figure 1, the connecting arms 19 are each in an uppermost position and the three lever arms 13 are fully retracted into the recess 5 as shown in Figures 1, 2 and 3. Rotation of the hub body member in clockwise direction relative to the cam sleeve then causes the connecting arms to be lowered, and the three lever arms to be raised toward a fully clamped position, as is shown in Figure 4 with a reel 3 positioned on the hub. The operation of the lever arms is illustrated in Figure 7 in which a lever arm 13 is shown in a fully retracted position, with its associated connecting arm 19 fully raised, in broken line form. The lever arm 13 is also shown, in full line form in a fully raised position, with the connecting arm 19 lowered. In the fully retracted position, the fixed pin 23 contacts the left-hand extremity (as shown in Figure 7) of the curved position 21A of its associated lever arm cam slot 21 and each roller sleeve 38 contacts the right-hand extremeity of a short horizontal upper region 35C of its associated cam sleeve cam slot 35. A tape reel 3 may be loaded on to a stationary hub having the lever arms 13 fully retracted. A spring loaded location spigot 39 provided in the reel supporting surface 2 locates with one of three axially directed grooves provided in the inner peripheral surface of the reel in known manner. The clamping mechanism is operated by energising the drive motor to apply a clockwise rotational torque to the hub body member, viewed from above, while the cam sleeve 15 is held stationary. As rotation of the body member commences, each roller sleeve 38 first traverses the horizontal region 35C of the associated cam slot 35, without causing movement of the retracted lever arms. Each roller sleeve is then guided into a downwardly sloping region 35B of its associated cam slot 35, thereby causing a downward movement of each connecting arm 19. The region 35B is angled at substantially 30° to the horizontal. Each pivot point 20 moves downwardly, and each lever arm is caused to pivot about its associated fixed pin 23, with an upward movement of the tip portion 14. Further clockwise rotation of the hub body causes each roller sleeve to downwardly follow the sloping region 35B of slot 35, with further downward movement of the pivot pin 20, and the lever arm tips 14 continue to rise upwardly with a trajectory governed by the profile of the curved regions 21A of the cam slots 21 in the lever arms. The tips 14 reach a position of maximum height when the fixed pins 23 have fully followed the curved regions 21A and are about to enter the short straight portions 21B of slots 21. At this position, the straight edge 17 and slot portion 21B of each lever arm are vertical, shown in full line in Figure 7. The tips 14 now lie above the upper surface of the reel 3 with a small clearance and the roller sleeves 38 have fully followed the downwardly sloping regions 35B of slots 35 and are about to enter long-tailed regions 35A which have a much reduced downward slope. The regions 35A are angled at substantially 4° to the horizontal. On further clockwise rotation of the hub body relative to the cam sleeve, each connecting arm 19 moves gently downwardly, at rate determined by the speed of rotation and the slope of the slot region 35A. Each lever arm 13 is now lowered as the fixed pins 23 enter the vertical slot portions 21B and the tips 14 gently close on the upper surface of the tape reel. The reel becomes axially clamped to the supporting surface 2 of the hub body with a clamping force dependent on the applied relative rotational torque, in similar manner to a coarse screw thread, and the torque may then be removed. The reel may be unclamped from the hub and the lever arms fully retracted by applying a relative rotational torque to the hub body in the reverse direction, i.e. anti-clockwise relative to the cam sleeve, viewed from above.

In a magnetic tape transport, the necessary rotational torque may conveniently be applied by means of the supply reel drive motor. During a clamping or unclamping operation, the cam sleeve 15 is held stationary by means of a solenoid operated horizontal locking pin 40 whose housing (not shown) is mounted to the drive motor casing (not shown), referring to Figures 2, 3, and 4. When the solenoid is energised, the locking pin is caused to enter a slot 41 in the lower region of the cam sleeve, thereby preventing the sleeve from rotating. Assuming the lever arms to be initially fully retracted, a supply tape reel is loaded to the hub and the drive motor and locking pin solenoid are both energised such that the drive shaft, hub body and inner and outer rings rotate slowly in a clockwise direction, viewed from above, while the cam sleeve is held stationary, thereby causing the lever arms to be raised and reel to be clamped as described above. Once clamped, the locking pin 40 may be retracted for normal recorder operation. The cam sleeve will then rotate with the hub body and the reel will remain axially clamped.

The reel may be unclamped and the lever arms retracted by simultaneously energising the drive motor and the locking pin actuator, with the drive motor operating in the reverse (anti-clockwise) direction. Once the arms are fully retracted, the drive motor and actuator may be de-energised prior to reel removal. It will be appreciated by those skilled in the art that in an automatically threading magnetic tape transport such as is described in GB 2183890A, the operation of the supply reel drive motor and locking pin actuator may be microprocessor controlled to operate, with other automatically controlled features, in a programmed sequence. A supply reel hub as described above has been designed to operate with tape reels of 36 cm (14 inches) diameter supporting tape of 25 mm (one inch) width on such a tape transport. The clamping force on each of the three lower arms was 85N, and a full reel of tape would remain seated against a vertical acceleration of 5g.

It will be appreciated that the above description is by way of example only, and alternative embodiments of the invention will be apparent to those skilled in the art.

## Claims

1. A drive hub assembly for imparting rotational motion about an axis to a load. said assembly having a supporting surface against which a said load can be clamped, said assembly comprising:
   a drive;
   a first rotary member;
   a second rotary member arranged concentrically with respect to, and adapted to co-operate with, said first rotary member, said first and second rotary members being capable of relative rotation about said axis to permit loading and unloading of a said load;
   and clamping means. coupled to said first rotary member, said clamping means being movable, with a motion that includes an angular component and an axial component, between a clamping position in which said clamping means clamps a said load axially against said supporting surface and a retracted position allowing loading and unloading of a said load;
   the arrangement being such that, in use. relative rotation of said first and second rotary members causes said clamping means to move from said retracted position to said clamping position to clamp a said load or from said clamping position to said retracted position to permit loading and unloading of a said load.

2. An assembly according to Claim 1 wherein said relative rotation of said first and second rotary members is effected by said drive.

3. An assembly according to Claims 1 or 2 further comprising means for maintaining said second rotary member in a fixed position whereby said relative rotation is effected by rotation of said first rotary member.

4. An assembly according to any one of the preceding Claims wherein. co-operation of said first and second rotary members is provided by a cam surface, associated with one of said first and second rotary members, and a cam follower, co-operable with said cam surface and associated with the other of said first and second rotary members.

5. An assembly according to Claim 4 wherein said cam follower is provided on said first rotary member and said cam surface is provided on said second rotary member.

6. An assembly according to any one of the preceding Claims, said clamping means being adapted to co-operate with a cylindrical body concentric with said first rotary member, said clamping means and said cylindrical body being capable of relative axial motion, wherein co-operation of said cylindrical body and said clamping means is provided by another cam surface, associated with one of said cylindrical body and said clamping means, and another cam follower, co-operable with said another cam surface and associated with the other of said cylindrical body and said clamping means.

7. An assembly according to Claim 6 wherein said another cam follower is provided on said cylindrical body and said another cam surface is provided on said clamping means.

8. An assembly according to any one of the preceding claims wherein when in said retracted position, said clamping means is positioned in a recessed position in said assembly.

FIG.1

FIG.2

FIG.3

FIG.4

FIG.5

FIG.6

FIG.7

FIG.8

0 285 272

FIG.9